# EUROPÄISCHE PATENTSCHRIFT

(11) **EP 2 866 997 B1**
(45) Veröffentlichungstag und Bekanntmachung des Hinweises auf die Patenterteilung: **15.03.2017**
(21) Anmeldenummer: 13753528.2
(22) Anmeldetag: 29.06.2013
(51) Int. Cl.: B29C 41/34, B29C 41/04, B29C 33/30, B28B 1/20

(54) **ROTATIONSVORRICHTUNG FÜR ROTATIONSGUSS-FORMKÖRPER**
ROTATION DEVICE FOR ROTATIONALLY MOULDED MOLDINGS
DISPOSITIF DE ROTATION POUR PIÈCES MOULÉES PAR COULÉE EN ROTATION

(30) Priorität: 30.06.2012 DE 102012012954
(43) Veröffentlichungstag der Anmeldung: 06.05.2015
(73) Patentinhaber: ROTO evolution GmbH, 08451 Crimmitschau (DE)
(72) Erfinder: NAUMANN, Frank, 04626 Vollmershain (DE)
(74) Vertreter: Grabovac, Dalibor
(86) Internationale Anmeldenummer: PCT/DE2013/000339
(87) Internationale Veröffentlichungsnummer: WO 2014/000727

(56) Entgegenhaltungen:
- WO-A1-99/56930
- US-A- 2 946 092
- US-A- 3 704 084

## Beschreibung

Die Erfindung betrifft eine Rotationsvorrichtung für die Herstellung von Rotationsguss-Formkörpern, bestehend aus einer als Kugel ausgebildeten Aufnahmevorrichtung für die Gussnegativform, einer Haltevorrichtung für die Aufnahmevorrichtung und einer Antriebseinheit für die Rotationsbewegung, wie sie zum Fertigen von einzelnen Rotationsguss-Formkörpern im Kaltverfahren aus z.B. zementgebunden Materialien ( Beton ) oder Ton oder im Heißverfahren aus Kunststoff, Kunstharz sowie Spezialmischungen benötigt wird.

Die Erfindung betrifft außerdem ein Verfahren zum Herstellen von Rotationsguss-Formkörpern unter Verwendung der erfindungsgemäßen Rotationsvorrichtung.

Herkömmliche Rotationsgussanlagen bestehen aus einem Rotationsarm, an welchem einseitig oder beidseitig die Aufnahmevorrichtung für die Gussform angeordnet ist. Mit Hilfe der Rotationsbewegung des Rotationsarmes und der zusätzlichen Rotationsbewegung der Haltevorrichtung für die Aufnahmevorrichtung der Gussform wird die allseitige Rotation der Form erzeugt.

Derartige Konstruktionen benötigen sehr viel Platz, da der Schwenkradius der Rotationsarme die Dimension der Form aber auch die Dimensionierung der Anlage bestimmt. Aus diesem Grund eigenen sich derartige Anlagekosten nur für größere Fertigungsstückzahlen. Außerdem wird ein erheblicher Energieaufwand für das Bewegen der Form durch den Schwenkarm benötigt.

Aus US 2,946,092 ist eine Vorrichtung zum rotierenden Verteilen einer flüssigen Füllung in einer Form bekannt. Die Vorrichtung weist zwei einander zugewandte Platten mit jeweils einer kreisförmigen Rinne auf, zwischen denen ein kugelförmiges Bauteil in beide Rinnen eingreifend, das die Form beinhaltet, gelagert ist. Jede der Platten ist drehend jeweils von einem eigenen Motor angetrieben.

Aus US 3,704,084 ist eine Rotationsgießvorrichtung bekannt, in der ein hohles sphärisches Element auf Rollen gelagert ist, wobei die Rollen so gesteuert werden, dass das kugelförmige Element um eine unendliche Anzahl von Achsen gedreht werden kann. Eine oder mehrere Formhohlräume sind innerhalb des kugelförmigen Elements angeordnet, die zusammen mit dem kugelförmigen Element zur Ausführung eines Rotationsformverfahrenes rotieren.

Aus WO 99/56930 sind eine Mehrachsen-Rotationsformvorrichtung und ein Verfahren zum kontinuierlichen Ausbilden von integral geformten Strukturen in einem Mehrachsen-Rotationsformvorgang bekannt. Die Rotationsformvorrichtung weist ein Trägerteil, ein Formenteil und einen Steuerabschnitt auf, wobei das Trägerteil ein bogenförmiges Rahmenelement aufweist. Das Formteil der Mehrachsen-Rotationsformvorrichtung umfasst eine bogenförmige Formenhalterung, die innerhalb des bogenförmigen Rahmenelement von diesem mit Hilfe von Magneten beabstandet gehalten ist.

Aufgabe der Erfindung ist es, eine Rotationsgussanlage zu schaffen, welche die Nachteile des Standes der Technik überwindet und gegenüber dem Stand der Technik energieeffizienter arbeitet. Es soll die Möglichkeit eines schnellen und kostengünstigen Sortimentswechsels der herzustellenden Produkte für die Serie aber auch eine kostengünstige Möglichkeit für das Herstellen von Einzelanfertigungen erreicht werden.

Erfindungsgemäß wird die Aufgabe durch die Merkmale des Anspruchs 1 gelöst, wobei die vorteilhaften Ausgestaltungen in den Unteransprüchen beschrieben sind.

Danach besteht eine Rotationsvorrichtung für Rotationsguss-Formteile aus einer Aufnahmevorrichtung für die Gussform, wobei diese Aufnahmevorrichtung für wenigstens eine Gussform erfindungsgemäß als Kugel ausgebildet ist. Die notwendige Haltevorrichtung für die kugelförmige Aufnahmevorrichtung der Gussformen ist dabei aus wenigstens einem Trag- und Führungselement ausgebildet und wird von diesem geführt. Ein Antriebselement steht mit der kugelförmigen Aufnahmevorrichtung kraftübertragend in Verbindung und initiiert die Rotation der Kugel.

Diese Art von Vorrichtung ermöglicht es, Werkzeugformen mit minimalem technischem Aufwand in Rotation zu versetzen. Bestehend aus mindestens einem Werkzeugaufnahme, mit der Außenkontur einer Kugel sowie einer Haltevorrichtung, in welcher dieses Kugel durch nur ein Antriebselement in Rotation versetzt wird.

In einer vorteilhaften Variante ist die Haltevorrichtung für die kugelförmige Aufnahmevorrichtung zur Aufnahme der Gussnegativformen aus wenigstens drei annähernd senkrecht ausgebildeten Trag- und Führungselementen in Form von Stativen ausgebildet, welche mit der Kugel über Führungsauflagen im Kontakt stehen. Mit den Führungsauflagen wird die Drehung der Kugel unterstützt, in dem diese beispielsweise als allseitig bewegliche Rollenlager ausgebildet sind.

Zur Gewährleistung einer umfassenden Richtungsänderung bei der Drehbewegung der Kugel ist die Antriebseinheit als ein mittels Motor angetriebener horizontal angeordneter Drehteller ausgebildet, auf dem das Antriebselement in Form eines separat mittels eines weiteren Motors angetriebenen Antriebsrades angeordnet ist, wobei das Antriebsrad mit der Kugel kraftübertragend und die Drehbewegung der Kugel bewirkend in Kontakt steht.

Mit dieser Lösung werden zwei Kraftangriffsrichtungen zum Initiieren der Drehbewegung gleichzeitig auf die Kugel ausgeübt, wodurch sicher gestellt ist, dass die Kugel sich umfassend in sehr viele Rotationsrichtungen bewegt, wodurch eine sehr gute Qualität des Rotationsgusses sicher stellt wird.

Um die Vorrichtung auch auf verschiedene Lagen, Größen und Massen der Aufnahmevorrichtung einstellen zu können, sind die Trag- und Führungsstative und/oder die Führungsauflagen der Trag- und Führungsstative lageveränderbar ausgebildet und können somit auf die notwendige Position eingestellt werden.

Eine weitere Variante zeigt, dass die Haltevorrichtung zur Aufnahme der Aufnahmevorrichtung als schalenförmige Haltevorrichtung ausgebildet ist und das Antriebselement als ein unter Druck angeordnetem Trenn- und Führungsmedium ausgebildet ist. Das Trenn- und Führungsmedium wird vorteilhafter Weise mittels wenigstens einer Steuerdüse in den Zwischenraum zwischen der Schalenoberfläche und der Oberfläche der kugelförmigen Aufnahmevorrichtung mittels Druck eingebracht. Die Form der Schalenoberfläche der Haltevorrichtung und die Krümmungslinie der Kugel sind dabei äquivalent ausgebildet. Als Trenn- und Führungsmedium werden flüssiges oder gasförmiges Medium geeigneter Konsistenz und Schichtdicke eingesetzt. Die Steuerdüse ist so steuerbar, dass damit die Richtungsänderung der Kugeldrehbewegung und die Drehgeschwindigkeit geregelt werden. Diese Lösung biete den Vorteil, dass über eine unkomplizierte Konstruktion der Rotationsanlage und über nur ein Steuerteil die Rotation der Kugel erreicht wird. Gleichzeitig kann die Haltevorrichtung zur Wärmeübertragung auf die kugelförmige Aufnahmevorrichtung für die Gussnegativformen bei Heißrotationsverfahren entsprechend ausgerüstet werden.

Die als Kugel ausgebildete Aufnahmevorrichtung weist vorteilhafter Weise wenigstens eine Trennebene auf, um die Gussnegativformen in der Aufnahmevorrichtung zusammen mit dem Gussmaterial anordnen zu können. Die Trennebene ist im Bedarfsfall so ausgebildet, dass diese gegen das Eindringen eines Mediums abdichtend ausgebildet ist.

Vorteilhafterweise sind die einzelnen Guss-Negativformen jeweils im Bereich der Trennebene in einer, in der kugelförmigen Aufnahmevorrichtung angeordneten Füll- und Formmasse, beidseitig und durch die Trennebene ebenfalls in ihrer Form getrennt angeordnet.

Die Füll- und Formmasse kann als Wechseleinsatz in die kugelförmigen Aufnahmevorrichtungssegmente angeordnet sein, so dass kostengünstig und Zeit einsparend auf ein neues Sortiment umgestellt werden kann.

Es besteht auch die Möglichkeit, einen Wechseleinsatz mit der Aufnahme einer oder mehrere Negativ-Gussformen und dem notwendigen Gussmaterial in die Füll- und Formmasse in eine dort vorgefertigte passfähige Ausnehmung anzuordnen. Beide Möglichkeiten bieten den Vorteil, dass alles außerhalb der Rotationsvorrichtung vorbereitet werden kann und nur die Kugel jeweils getauscht werden muss.

Somit kann in mindestens einer Trennebene geöffnet werden, so dass die Aufnahmevorrichtung für die Gussnegativformen im geöffneten Zustand aus mindesten 2 Teilen besteht. Diese Teile müssen durch geeignete Mittel, z.B. Magnetschliesser beim Rotationsprozess zusammen gehalten werden. Diese Verbindungselemente müssen in der Trennebene bzw. auf den Schnittflächen liegen und dürfen dabei die Aussenkontur der Kugel nicht stören.

In den entstandenen Schnittflächen der Kugel wird unter Berücksichtigung der Endformungsrichtung, von Hinterschnitten, der Materialmenge, des Schwerpunktes usw. die Form des zu schaffenden Rotationskörpers im Negativ eingebracht.

Die Größe der Kugel ist maßgeblich von der Größe, Geometrie sowie Gewicht des zu erzeugenden rotationsgeformten Körpers abhängig.

Diese geschaffenen Aussparungen ( negativ Form ) wird mit der nötigen Menge an Material gefüllt und für die Zeit der Herstellung an den Trennebenen miteinander verbunden.

Die Form wird jetzt auf der Kugel-Rotations- Anlage in Rotation versetzt, wobei sich das in der Form befindliche Material an die Wand der Negativ Form gleichmäßig anlegt.

Die Form muss zumindest so lange in Rotation bleiben, bis sich das Material an den Formflächen angelegt hat und Formstabil ist.

Nun kann die Form von der Kugel-Rotations- Anlage genommen werden und bis zur endgültigen Fertigstellung ( Aushärtung ) anderweitig aufbewahrt werden.

Nach Fertigstellung wird die Kugel an den Trennebenen geöffnet und der geformte Körper entnommen. Jetzt kann der Prozess der Herstellung erneut beginnen.

Es besteht auch die Möglichkeit, dass die Füll- und Formmasse als verlorene Schalung die kugelförmige Aufnahmevorrichtung für die Negativform selbst bildet. Dazu muss die Füll- und Formmasse eine ausreichende Stabilität aufweisen, um den Rotationsprozess als Kugelform zu überstehen. Die Negativform und das Gussmaterial kann dabei bei der Herstellung der Kugel aus Füll- und Formmasse gleich mit eingearbeitet werden oder beides wird nachträglich mittels geeigneter Verfahren, wie dem Laser-Sinterverfahren in die Formmasse eingearbeitet. Nach dem Rotationsprozess wird die kugelförmige Aufnahmevorrichtung zerstört und das fertig rotierte Formteil kann entnommen werden.

Dieser einfache Aufbau von Rotations- Anlage und -Form macht es möglich, geringe Stückzahlen von rotationsgeformten Körpern kostengünstig herzustellen.

Durch die Reduzierung des technischen Aufwandes gegenüber herkömmlichen Rotations- Anlagen wird die Betriebssicherheit erhöht sowie der Verschleiß auf ein Minimum reduziert.

Durch die einfache Kombination von Rotationsanlage und Form ist ohne mechanischen Aufwand ein schneller Formenwechsel möglich.

Durch das Verarbeiten von Materialien in der Rotation, welche mit und ohne Zufuhr von Wärme Formstabilität erhalten wie z.B. zementgebunden Materialien, Ton, Kunststoff, Kunstharz sowie Spezialmischungen usw., können erhebliche Energiekosten sowie Ressourcen gespart werden.

Die Kosten für den Formenbau werden erheblich reduziert, da nicht unbedingt temperaturstabile Materialien wie z.B. Alu, Stahl eingesetzt werden müssen.

Nachstehend soll die Lösung an Hand von Ausführungsbeispielen näher erläutert werden.

In der beigefügten Zeichnung zeigen:
Fig. 1 eine schematische Ansicht einer Rotationsvorrichtung mit der kugelförmige Aufnahmevorrichtung 1, den drei Trag- und Führungselementen 5 in Form von Stativen mit den Führungsauflagen 6 und dem Antriebselement 9, bestehen aus Drehteller 7 und .Antriebsrad;
Fig. 2 eine schematische Darstellung einer Aufnahmevorrichtung 1 mit einer Ausnehmung zur Aufnahme der Gussnegativformen (4) im geöffneten Zustand und den Schließvorrichtungen;
Fig. 3 eine schematische Ansicht einer Rotationsvorrichtung mit der kugelförmige Aufnahmevorrichtung 1, der schalenförmigen Haltevorrichtung 12 mit Anordnung der Steuerdüsen 14 und dem Trenn- und Führungsmedium 13 und
Fig. 4 eine schematische Darstellung eines Wechseleinsatzes 3 für die Aufnahme wenigstens einer Gussnegativform und Gussmaterial.

### Ausführungsbeispiel 1:

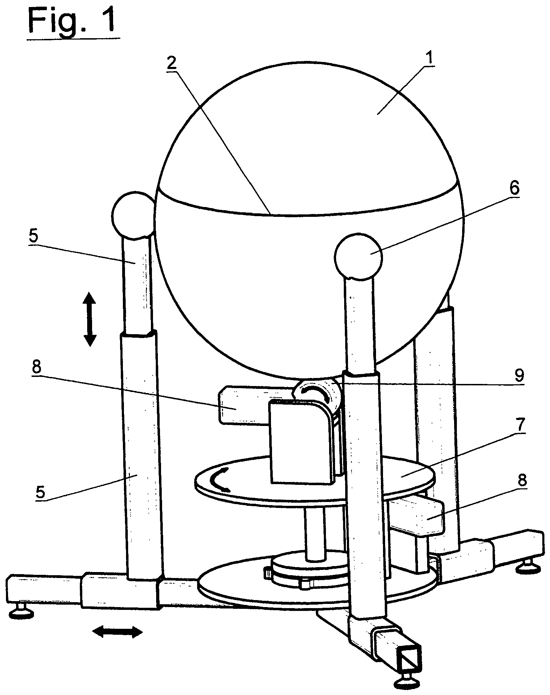

Gemäß der Figuren 1, 2 und 4 besteht eine Rotationsvorrichtung für die Herstellung von Rotationsguss-Formkörper aus einer Aufnahmevorrichtung für die Gussnegativform, einer Haltevorrichtung für die Aufnahmevorrichtung und einer Antriebseinheit für die Sicherstellung der Rotationsbewegung.

Erfindungsgemäß ist die Aufnahmevorrichtung 1 für die Aufnahme wenigstens einer Gussnegativform 4 als Kugel ausgebildet. Die Haltevorrichtung für die kugelförmige Aufnahmevorrichtung 1 besteht aus drei annähernd senkrecht ausgebildeten Stativen, welche als Trag- und Führungselemente 5 dienen. An diesen sind im oberen Bereich jeweils eine Führungsauflage 6 angeordnet, welche vorteilhafter Weise als allseitig bewegbare Rollenlager ausgebildet sind. Mit diesen Führungsauflagen 6 stehen die Stative mit der Kugel im Kontakt und führen und unterstützen somit die Lage und die Drehbewegung der Kugel.

Über das Antriebselement 9, welche aus einem mit der Kugel kraftübertragend in Kontakt stehenden Antriebsrad und einem Drehteller 7 besteht, wird die Kugel in ihrer Drehbewegung angetrieben. Dabei weist der waagerecht in der Rotationsvorrichtung angeordnete Drehteller 7 einen separaten Motor 8 auf und ist somit separat und taktartig ansteuerbar. Das Antriebsrad weist ebenfalls einen separaten Motor 8 auf und ist durch diesen ebenfalls separat ansteuerbar.

Da das Antriebsrad senkrecht in der Rotationsvorrichtung auf dem waagerechten Drehteller 7 angeordnet ist, werden zwei Kraftangriffsrichtungen für das Initiieren der Drehbewegung gleichzeitig auf die Kugeloberfläche übertragen, was dazu führt, dass die Kugel eine Vielzahl von Drehrichtungen ausübt. Wird der Drehteller taktartig angesteuert, kann dieser Effekt und die Anzahl der Drehrichtungsänderungen erhöht werden.

Vorteilhafter Weise sind die Trag- und Führungsstative zur Gewährleistung der Lagepositionierung und der Größenanpassung an verschieden große kugelförmige Aufnahmevorrichtungen in ihrer Positionierung lageveränderbar angeordnet.

Die als Kugel ausgebildete Aufnahmevorrichtung 1 weist eine Trennebene 2 auf. Mittels Schließvorrichtungen 11, die vorteilhafterweise als Magnetverschlusssystem ausgebildet ist, wird die Kugel während des Rotationsprozesses geschlossen gehalten.

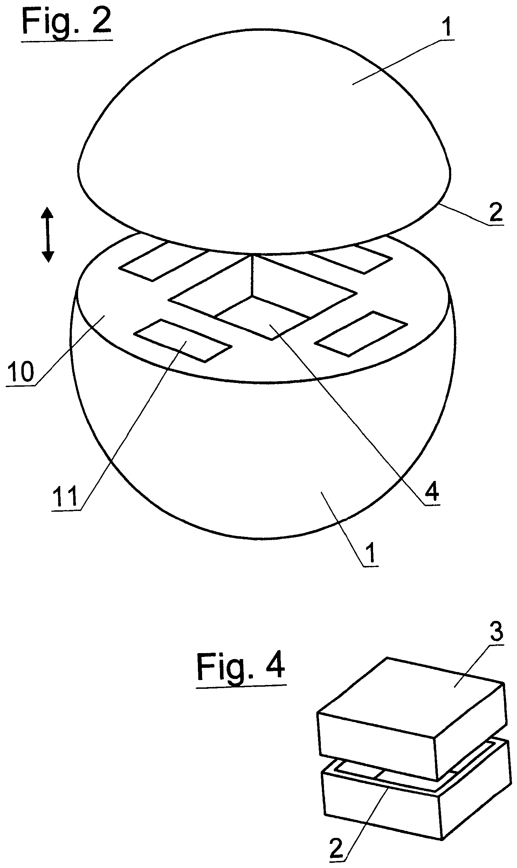

In den beiden durch die Trennebene 2 gebildeten Kugelabschnitten ist jeweils die Füll-/und Formmasse 10 angeordnet, in der ein Aufnahmebereich für die Anordnung der Gussnegativform 4 oder eines Wechseleinsatzes 3 gemäß Fig. 4 ausgeformt ist.

Entweder kann die Gussnegativform 4 mit dem Gussmaterial direkt in der Füll- und Formmasse 10 angeordnet werden oder in einem Wechseleinsatz sind die Gussnegativformen und das Gussmaterial aufgenommen. Die einzelnen Guss- Negativformen 4 sind dabei jeweils im Bereich der Trennebene 2 in der Füll- und Formmasse 10, wenigstens einseitig und durch wenigstens eine Trennebene 2 ebenfalls in ihrer Form getrennt angeordnet.

Der Wechseleinsatz 11 und/oder die Negativformen 4 werden in die Kugel 1 in die entsprechend geformten Ausnehmungen angeordnet und die Kugel wird verschlossen.

Es besteht auch die Möglichkeit, dass die Füll- und Formmasse 10 als verlorene Schalung die kugelförmige Aufnahmevorrichtung 1 selbst bildet und in ihr die Gussnegativform 4 mit dem Gussmaterial oder der Wechseleinsatz 3 mit der Gussnegativform 4 und dem Gussmaterial angeordnet ist.

Dabei kann die Gussnegativform oder der Wechseleinsatz beim Herstellen der Aufnahmevorrichtung 1 aus Füll- und Formmasse gleich mit eingearbeitet und positioniert werden oder es kann nachträglich durch ein Laser-Sinterverfahren die Gussnegativform herausgearbeitet, das Gussmaterial eingefüllt und die Kugel verschlossen werden. Diese Aufnahmevorrichtung muss jedoch zur Entnahme der fertigen Gussformteile zerstört werden.

Die Kugel wird in der Haltevorrichtung auf den Trag- und Führungselementen 5 zwischen den Führungsauflagen 6 positioniert und der Rotationsprozess kann beginnen.

Nach dem Rotationsprozess kann die Kugel entweder auf den Führungsstativen geöffnet und neu mit Wechseleinsätzen 3 oder die Negativgussformen 4 mit Gussmaterial bestückt werden.

Durch geeignete Wärmezufuhr von außen kann diese Vorrichtung auch zur Heißrotation benutzt werden.

Mit dieser erfinderischen Vorrichtung wurde eine Lösung geschaffen, mit deren Hilfe kostengünstig und energiesparend Rotationsguss-Formkörper hergestellt werden können. Auf Grund des Realisierens einer umfassenden Richtungsänderung der Drehbewegung der Kugel wird ein hohes Maß an Qualität bei den Formkörpern erreicht. Ein wesentlicher Vorteil besteht darin, dass mit dieser Lösung schnell und unkompliziert auf Kundenwünsche, neue Formen und Extras reagiert werden kann. Der Werkzeugwechsel ist schnell und unkompliziert zu realisieren und alle Vorbereitungsmaßnahmen können außerhalb des Rotationsprozesses vorgenommen werden, so dass hierdurch ein hohes Maß an Zeitersparnis bei der Fertigung erreicht werden wird. Durch die verschiedenen Einstellmöglichkeiten, wie zum Beispiel Drehgeschwindigkeit, Drehrichtung des Antriebsrades, können material- und formenspezifische Anpassungen getroffen werden.

Ist der Rotationsvorgang beendet, ( Formstabilität ist erreicht ) kann die Aufnahmevorrichtung entfernt werden und eine neue und bestückte Aufnahmevorrichtung der Haltevorrichtung zugeordnet werden. Die Aufnahmevorrichtung 1 als auch die Gussnegativformen können für weitere Rotationsgussvorgänge wieder verwendet werden.

### Ausführungsbeispiel 2:

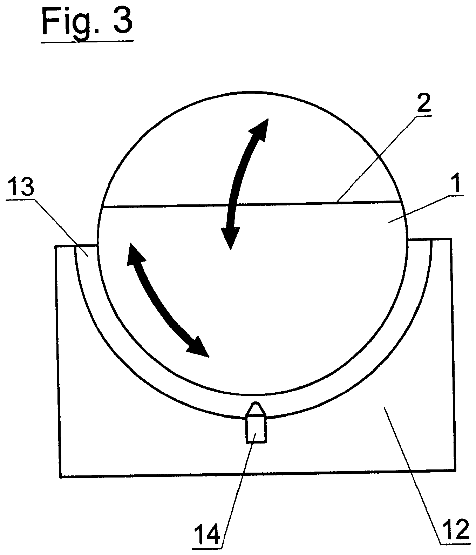

Gemäß der Figur 3 besteht die Aufnahmevorrichtung 1 ebenfalls aus einer Kugel zur Aufnahme der Gussnegativformen 4 oder von Wechseleinsätzen 3 mit entsprechenden Anordnungen von Gussnegativformen 3. Die Haltevorrichtung zur Aufnahme der kugelförmigen Aufnahmevorrichtung 1 ist als schalenförmige Haltevorrichtung 12 ausgebildet und ihr Schalenbogen-Durchmesser entspricht annähernd dem der Kugeloberflächen-Krümmung. Zwischen der Schalenoberfläche und der Oberfläche der kugelförmigen Aufnahmevorrichtung ist ein Trenn- und Führungsmedium 13 mittels einer ansteuerbaren Steuerdüse 14 angeordnet. Das Trenn- und Führungsmedium 13 und die Steuerdüse 14 dienen dabei als Antriebselement 9 zum Initiieren der Kugelrotation. Mit der Steuerdüse werden die Drehrichtungsänderung und die Drehgeschwindigkeit der Kugel geregelt.

Als Trenn- und Führungsmedium 13 werden flüssige und/oder gasförmige Medien geeigneter Konsistenz und Schichtdicke eingesetzt, wie Wasser, Öl, Luft und andere Medien.

Die Aufnahmevorrichtung 1 kann wie im Ausführungsbeispiel 1 ausgebildet sein und für die Vorrichtung in ihren verschiedenen Varianten zum Einsatz gebracht werden.

Mittels geeigneter Sensoren kann die Positionierung der Kugel während der Rotation überwacht und für die Öffnung der Kugel eingestellt werden.

Mit dieser Vorrichtung wurde eine elegante Lösung geschaffen, die den Vorteil bietet, dass mit nur wenigstens einem Steuerelement die umfassende Drehrichtungsänderung der Kugel und deren Geschwindigkeit geregelt werden können.

Die Anpassung an verschiedene Anforderungen des Rotations-Gussprozesses kann über die Steuerdüse schnell und unkompliziert eingestellt und geregelt werden. Die Entnahme und Neubestückung kann auch hier sowohl während des Aufenthaltes der Kugel in der Haltevorrichtung oder nach dem Entfernen der Kugel aus der Haltevorrichtung erfolgen.

### Ausführungsbeispiel 3:

Es besteht auch die Möglichkeit, die Vorteile aus den Beispielen 1 und 2 zu kombinieren. Diese Lösung besteht aus einer kugelförmigen Aufnahmevorrichtung 1 gemäß der Fig. 2 und kann sowohl die Gussnegativform 4 direkt oder über einen Wechseleinsatz 3 aufnehmen.
Die Kugel ist dabei schwimmend in einem mit Medium gefüllten Becken angeordnet, wobei als Haltevorrichtung sowohl die Lösung mit den Führungsstativen 5,6 aus Beispiel 1 als auch die Lösung mit der Aufnahmeschale 12 Anwendung finden kann. Als Antriebselement 9 kann dabei entweder der Drehteller 7 mit Antriebsrad fungieren. Dieser sollte vorteilhafter Weise jedoch außerhalb des Mediums angeordnet sein und von Oben auf die Kugel 1 kraftübertragend einwirken, um die Rotation zu bewirken. Es besteht jedoch auch die Möglichkeit, mittels Steuerdüse 14 unterhalb der Kugelaufnahme 5, 6 oder 12 und im Medium angeordnet, die Kugel in Drehbewegung zu versetzen.

Die Trennebene 2 der Kugel 1 ist dabei gegen das Eindringen des Mediums abdichtend ausgebildet.

Diese Lösung hat den entscheidenden Vorteil, dass die Kugel in dem Medium schwimmt und somit sehr leicht zu bewegen ist. Dies hat zur Folge, dass eine immense Energieersparnis zu verzeichnen ist.

### Bezugszeichenliste:

- 1: Aufnahmevorrichtung für die Guss-Negativformen
- 2: Trennebene der Aufnahmevorrichtung
- 3: Wechseleinsatz für die Gussnegativformen
- 4: Gussnegativform
- 5: Trag- und Führungselemente
- 6: Führungsauflagen
- 7: Angetriebener Drehteller
- 8: Motorantrieb
- 9: Antriebselement
- 10: Füll- und Formmasse in der Aufnahmevorrichtung
- 11: Schließvorrichtung
- 12: Schalenförmige Haltevorrichtung
- 13: Trenn- und Führungsmedium
- 14: Steuerdüse

## Patentansprüche

1. Rotationsvorrichtung für die Herstellung von Rotationsguss-Formkörpern, bestehend aus einer als Kugel ausgebildeten Aufnahmevorrichtung (1) für wenigstens eine Gussnegativform, einer Haltevorrichtung für die Aufnahmevorrichtung und einer Antriebseinheit für die Rotationsbewegung, **dadurch gekennzeichnet, dass**
a. die Aufnahmevorrichtung (1) für die Aufnahme wenigstens einer Gussnegativform (4) durch eine Haltevorrichtung mit der Anordnung wenigstens eines Trag- und Führungselementes (5) gehalten ist und durch ein einziges, in der Rotationsvorrichtung angeordnetes und mit der Aufnahmevorrichtung (1) kraftübertragend in Verbindung stehendes, Antriebselement (9) in Rotation versetzt wird und/oder dass
b. die Aufnahmevorrichtung (1) für die Aufnahme wenigstens einer Gussnegativform (4) durch eine Haltevorrichtung mit der Anordnung wenigstens eines Trag- und Führungselementes (5) gehalten ist und durch ein in der Rotationsvorrichtung angeordnetes und mit der Aufnahmevorrichtung (1) kraftübertragend in Verbindung stehendes Antriebselement (9) in Rotation versetzt wird, wobei die Aufnahmevorrichtung (1) mittels der Haltevorrichtung derart gehalten ist, dass sie während der Rotation ortsfest bleibt.

2. Rotationsvorrichtung nach Anspruch 1, **dadurch gekennzeichnet, dass** die Haltevorrichtung für die kugelförmige Aufnahmevorrichtung (1) zur Aufnahme der Gussnegativformen (4) aus wenigstens drei annähernd senkrecht ausgebildeten Trag- und Führungselementen (5) in Form von Stativen mit zu der als Kugel ausgebildeten Aufnahmevorrichtung (1) in Kontakt stehenden und die Drehung der Kugel unterstützenden Führungsauflagen (6) ausgebildet ist.

3. Rotationsvorrichtung nach Anspruch 1 oder 2, **dadurch gekennzeichnet, dass** die Antriebseinheit zur Gewährleistung einer umfassenden Richtungsänderung der Drehbewegung der als Kugel ausgebildeten Aufnahmevorrichtung (1) als ein mittels eines Motors (8) angetriebener, horizontaler Drehteller (7) ausgebildet ist, auf dem das Antriebselement (9) in Form eines separat mittels eines weiteren Motors (8) angetriebenen Antriebsrades angeordnet ist, wobei das Antriebsrad mit der als Kugel ausgebildeten Aufnahmevorrichtung (1) kraftübertragend und die Drehbewegung der Kugel bewirkend in Kontakt steht.

4. Rotationsvorrichtung nach Anspruch 2 oder 3, **dadurch gekennzeichnet, dass** die Führungsauflagen (6) der Trag- und Führungselemente (5) zur Gewährleistung der Drehbewegung der Kugel (1) als allseitig bewegbare Rollenlager ausgebildet sind.

5. Rotationsvorrichtung nach einem der Ansprüche 1 bis 4, **dadurch gekennzeichnet, dass** die Trag- und Führungselemente (5) in Form von Stativen zur Gewährleistung der Lagepositionierung und der Größenanpassung an verschiedene kugelförmige Aufnahmevorrichtungen in ihrer Positionierung lageveränderbar angeordnet sind.

6. Rotationsvorrichtung nach Anspruch 1, **dadurch gekennzeichnet, dass** die Haltevorrichtung zur Aufnahme der Aufnahmevorrichtung (1) als schalenförmige Haltevorrichtung (12) ausgebildet ist und das Antriebselement (9) als ein unter Druck stehendes Trenn- und Führungsmedium (13) ausgebildet ist, wobei das Trenn- und Führungsmedium (13) mittels wenigstens einer Steuerdüse (14) zwischen der Schalenoberfläche und der Oberfläche der kugelförmigen Aufnahmevorrichtung eingebracht ist.

7. Rotationsvorrichtung nach Anspruch 6, **dadurch gekennzeichnet, dass** das Trenn- und Führungsmedium (13) als flüssiges oder gasförmiges Medium in geeigneter Konsistenz und Schichtdicke ausgebildet ist.

8. Rotationsvorrichtung nach einem der Ansprüche 1 bis 7, **dadurch gekennzeichnet, dass** die als Kugel ausgebildete Aufnahmevorrichtung (1) wenigstens eine Trennebene (2) aufweist.

9. Rotationsvorrichtung nach Anspruch 8, **dadurch gekennzeichnet, dass** die einzelnen Guss-Negativformen (4) jeweils im Bereich der Trennebene (2) in einer, in der kugelförmigen Aufnahmevorrichtung (1) angeordneten Füll-/ und Formmasse (10), wenigstens einseitig und durch wenigstens eine Trennebene (2) ebenfalls in ihrer Form getrennt angeordnet sind.

10. Rotationsvorrichtung nach einem der Ansprüche 1 bis 9, **dadurch gekennzeichnet, dass** die Füll- und Formmasse (10) als verlorene Schalung die kugelförmige Aufnahmevorrichtung (1) für die Gussnegativform (4) bildet.

11. Rotationsvorrichtung nach einem der Ansprüche 1 bis 9, **dadurch gekennzeichnet, dass** die Gussnegativformen (4) als Wechseleinsatz (3) in kugelförmigen Aufnahmevorrichtungshälften (1) oder der Füll- und Formmasse (10) angeordnet sind.

12. Verfahren zum Herstellen von Rotationsguss-Formkörpern mit einer Rotationsvorrichtung nach einem der Ansprüche 1 bis 11, **dadurch gekennzeichnet, dass** die als Kugel ausgebildete Aufnahmevorrichtung (1), die wenigstens eine Gussnegativform (4) beinhaltet, in der Haltevorrichtung positioniert und anschließend in Rotation versetzt wird.

13. Verfahren nach Anspruch 12, **dadurch gekennzeichnet, dass**
a. nach Beendigung des Rotationsprozesses eine Neubestückung der Aufnahmevorrichtung (1) erfolgt oder dass
b. nach Beendigung des Rotationsprozesses eine Neubestückung der Aufnahmevorrichtung (1) während des Aufenthaltes der als Kugel ausgebildeten Aufnahmevorrichtung in der Haltevorrichtung erfolgt, oder dass
c. nach Beendigung des Rotationsprozesses eine Neubestückung der Aufnahmevorrichtung (1) erfolgt, nachdem die als Kugel ausgebildete Aufnahmevorrichtung aus der Haltevorrichtung entfernt wurde.

14. Verfahren nach Anspruch 12 oder 13, **dadurch gekennzeichnet, dass**
a. die Aufnahmevorrichtung (1) nach Beendigung des Rotationsprozesses aus der Haltevorrichtung entfernt wird und eine neue und bestückte Aufnahmevorrichtung in der Haltevorrichtung positioniert wird und/oder dass
b. die Aufnahmevorrichtung (1) und/oder die Gussnegativformen nach Beendigung des Rotationsprozesses für weitere Rotationsgussvorgänge wieder verwendet werden.

15. Rotationsguss-Formkörper hergestellt mit einer Rotationsvorrichtung nach einem der Ansprüche 1 bis 11 und/oder gemäß einem Verfahren nach einem der Ansprüche 12 bis 14.

## Claims

1. Rotation device for the production of rotationally moulded mouldings, consisting of a receiving device (1), which is designed as a sphere, for at least one negative casting mould, a holding device for the receiving device and a drive unit for the rotational movement, **characterized in that**
a. the receiving device (1) for receiving at least one negative casting mould (4) is held by a holding device with the arrangement of at least one supporting and guiding element (5) and is set into rotation by a single drive element (9) which is arranged in the rotation device and is connected in a force-transmitting manner to the receiving device (1), and/or **in that**
b. the receiving device (1) for receiving at least one negative casting mould (4) is held by a holding device with the arrangement of at least one supporting and guiding element (5) and is set into rotation by a drive element (9) which is arranged in the rotation device and is connected in a force-transmitting manner to the receiving device (1), wherein the receiving device (1) is held by means of the holding device in such a manner that it remains fixed in position during the rotation.

2. Rotation device according to Claim 1,
**characterized in that** the holding device for the spherical receiving device (1) for receiving the negative casting moulds (4) is formed from at least three supporting and guiding elements (5) which are formed approximately perpendicularly and in the form of stands with guiding supports (6) which are in contact with the receiving device (1) designed as a sphere and assist the rotation of the sphere.

3. Rotation device according to Claim 1 or 2,
**characterized in that** the drive unit for ensuring a comprehensive change in direction of the rotational movement of the receiving device (1) designed as a sphere is designed as a horizontal turntable (7) which is driven by means of a motor (8) and on which the drive element (9) in the form of a drive wheel driven separately by means of a further motor (8) is arranged, wherein the drive wheel is in contact with the receiving device (1) designed as a sphere in a force-transmitting manner and so as to bring about the rotational movement of the sphere.

4. Rotation device according to Claim 2 or 3,
**characterized in that** the guiding supports (6) of the supporting and guiding elements (5) are designed as roller bearings which are movable on all sides, in order to ensure the rotational movement of the sphere (1).

5. Rotation device according to one of Claims 1 to 4,
**characterized in that** the supporting and guiding elements (5) in the form of stands are arranged so as to be variable in their positioning to ensure the positioning and the adaptation in terms of size to various spherical receiving devices.

6. Rotation device according to Claim 1,
**characterized in that** the holding device for receiving the receiving device (1) is designed as a shell-type holding device (12), and the drive element (9) is designed as a pressurized separating and guiding medium (13), wherein the separating and guiding medium (13) is introduced between the shell surface and the surface of the spherical receiving device by means of at least one control nozzle (14).

7. Rotation device according to Claim 6,
**characterized in that** the separating and guiding medium (13) is designed as a liquid or gaseous medium of a suitable consistency and layer thickness.

8. Rotation device according to one of Claims 1 to 7, **characterized in that** the receiving device (1) designed as a sphere has at least one separating plane (2).

9. Rotation device according to Claim 8,
**characterized in that** the individual negative casting moulds (4) are each arranged in the region of the separating plane (2) in a filling/and moulding compound (10) arranged in the spherical receiving device (1), at least one side and likewise separated in terms of their shape by at least one separating plane (2).

10. Rotation device according to one of Claims 1 to 9,
**characterized in that** the filling and moulding compound (10), as expendable formwork, forms the spherical receiving device (1) for the negative casting mould (4).

11. Rotation device according to one of Claims 1 to 9,
**characterized in that** the negative casting moulds (4) are arranged as an interchangeable insert (3) in spherical receiving device halves (1) or in the filling and moulding compound (10).

12. Method for producing rotationally moulded mouldings with a rotation device according to one of Claims 1 to 11, **characterized in that** the receiving device (1) which is designed as a sphere and contains at least one negative casting mould (4) is positioned in the holding device and is subsequently set into rotation.

13. Method according to Claim 12, **characterized in that**
a. after completion of the rotation process, the receiving device (1) is reequipped, or **in that**
b. after completion of the rotation process, the receiving device (1) is reequipped while the receiving device designed as a sphere resides in the holding device, or **in that**
c. after completion of the rotation process, the receiving device (1) is reequipped after the receiving device designed as a sphere has been removed from the holding device.

14. Method according to Claim 12 or 13, **characterized in that**
a. after completion of the rotation process, the receiving device (1) is removed from the holding device and a new and equipped receiving device is positioned in the holding device, and/or **in that**
b. after completion of the rotation process, the receiving device (1) and/or the negative casting moulds are reused for further rotational casting operations.

15. Rotationally moulded moulding produced with a rotation device according to one of Claims 1 to 11 and/or according to a method according to one of Claims 12 to 14.

## Revendications

1. Dispositif de rotation pour la fabrication de corps moulés par coulée en rotation, constitué d'un dispositif de réception (1) réalisé sous forme de sphère pour au moins un moule de coulée négatif, un dispositif de retenue pour le dispositif de réception et une unité d'entraînement pour le déplacement en rotation, **caractérisé en ce que**
a. le dispositif de réception (1) pour recevoir au moins un moule de coulée négatif (4) est retenu par un dispositif de retenue avec l'agencement d'au moins un élément de support et de guidage (5) et est mis en rotation par un élément d'entraînement (9) unique disposé dans le dispositif de rotation et en liaison par transmission de force avec le dispositif de réception (1) et/ou **en ce que**
b. le dispositif de réception (1) pour recevoir au moins un moule de coulée négatif (4) est retenu par un dispositif de retenue avec l'agencement d'au moins un élément de support et de guidage (5) et est mis en rotation par un élément d'entraînement (9) disposé dans le dispositif de rotation et en liaison par transmission de force avec le dispositif de réception (1), le dispositif de réception (1) étant retenu au moyen du dispositif de retenue de telle sorte qu'il reste fixé en position pendant la rotation.

2. Dispositif de rotation selon la revendication 1,
**caractérisé en ce que** le dispositif de retenue pour le dispositif de réception en forme de sphère (1) pour recevoir les moules de coulée négatifs (4) est réalisé à partir d'au moins trois éléments de support et de guidage (5) réalisés approximativement verticalement en forme de pieds avec des appuis de guidage (6) en contact avec le dispositif de réception (1) réalisés sous forme de sphère et favorisant la rotation de la sphère.

3. Dispositif de rotation selon la revendication 1 ou
2, **caractérisé en ce que** l'unité d'entraînement, pour garantir une variation de direction complète du mouvement de rotation du dispositif de réception (1) réalisé sous forme de sphère, est réalisée en tant que plateau tournant horizontal (7) entraîné au moyen d'un moteur (8), sur lequel l'élément d'entraînement (9) est disposé sous la forme d'une roue d'entraînement entraînée séparément au moyen d'un moteur supplémentaire (8), la roue d'entraînement étant en contact par transmission de force avec le dispositif de réception (1) réalisé sous forme de sphère et provoquant le mouvement de rotation de la sphère.

4. Dispositif de rotation selon la revendication 2 ou
3, **caractérisé en ce que** les appuis de guidage (6) des éléments de support et de guidage (5), pour assurer le mouvement de rotation de la sphère (1), sont réalisés sous forme de paliers à rouleaux déplaçables de tous les côtés.

5. Dispositif de rotation selon l'une quelconque des revendications 1 à 4, **caractérisé en ce que** les éléments de support et de guidage (5) sont disposés de manière déplaçable dans leur positionnement sous forme de pieds pour garantir le positionnement et l'adaptation de taille à différents dispositifs de réception en forme de sphère.

6. Dispositif de rotation selon la revendication 1, **caractérisé en ce que** le dispositif de retenue pour recevoir le dispositif de réception (1) est réalisé sous forme de dispositif de retenue en forme de coque (12) et l'élément d'entraînement (9) est réalisé sous forme de milieu de séparation et de guidage (13) sous pression, le milieu de séparation et de guidage (13) étant introduit au moyen d'au moins une buse de commande (14) entre la surface de la coque et la surface du dispositif de réception en forme de sphère.

7. Dispositif de rotation selon la revendication 6, **caractérisé en ce que** le milieu de séparation et de guidage (13) est réalisé sous forme de milieu liquide ou gazeux de consistance et d'épaisseur de couche appropriées.

8. Dispositif de rotation selon l'une quelconque des revendications 1 à 7, **caractérisé en ce que** le dispositif de réception (1) réalisé sous forme de sphère présente au moins un plan de séparation (2).

9. Dispositif de rotation selon la revendication 8, **caractérisé en ce que** les moules de coulée négatifs individuels (4) sont chacun disposés dans la région du plan de séparation (2) dans une masse de remplissage et de moulage (10) disposée dans le dispositif de réception en forme de sphère (1), au moins d'un côté et également séparés dans leur moule par au moins un plan de séparation (2).

10. Dispositif de rotation selon l'une quelconque des revendications 1 à 9, **caractérisé en ce que** la masse de remplissage et de moulage (10) forme en tant que coquille perdue le dispositif de réception en forme de sphère (1) pour le moule de coulée négatif (4).

11. Dispositif de rotation selon l'une quelconque des revendications 1 à 9, **caractérisé en ce que** les moules de coulée négatifs (4) sont disposés en tant qu'inserts remplaçables (3) dans des moitiés du dispositif de réception en forme de sphère (1) ou dans la masse de remplissage et de moulage (10).

12. Procédé de fabrication de corps moulés par coulée en rotation, comprenant un dispositif de rotation selon l'une quelconque des revendications 1 à 11, **caractérisé en ce que** le dispositif de réception (1) réalisé en forme de sphère contient l'au moins un moule de coulée négatif (4) dans lequel est positionné le dispositif de retenue qui est ensuite mis en rotation.

13. Procédé selon la revendication 12, **caractérisé en ce que**
a. à la fin du processus de rotation, un nouveau garnissage du dispositif de réception (1) est effectué ou **en ce que**
b. à la fin du processus de rotation, un nouveau garnissage du dispositif de réception (1) est effectué pendant le séjour du dispositif de réception réalisé en forme de sphère dans le dispositif de retenue ou **en ce que**
c. à la fin du processus de rotation, un nouveau garnissage du dispositif de réception (1) est effectué après que le dispositif de réception réalisé en forme de sphère a été enlevé du dispositif de retenue.

14. Procédé selon la revendication 12 ou 13, **caractérisé en ce que**
a. le dispositif de réception (1) est enlevé à la fin du processus de rotation hors du dispositif de retenue et un nouveau dispositif de réception garni est positionné dans le dispositif de retenue et/ou **en ce que**
b. le dispositif de réception (1) et/ou les moules de coulée négatifs sont réutilisés à la fin du processus de rotation pour d'autres opérations de coulée en rotation.

15. Corps moulé par coulée en rotation fabriqué avec un dispositif de rotation selon l'une quelconque des revendications 1 à 11 et/ou selon un procédé selon l'une quelconque des revendications 12 à 14.
